# FASCICULE DE BREVET EUROPEEN

(11) **EP 4 168 860 B1**
(45) Date de publication et mention de la délivrance du brevet: **24.04.2024**
(21) Numéro de dépôt: 21733431.7
(22) Date de dépôt: 15.06.2021
(51) Int. Cl.: G04B 19/10, G04B 19/12, G04B 19/18, G04B 45/00

(54) **FORMATION D'UN OBJET TRIDIMENSIONNEL SUR UN CADRAN**
BILDUNG EINES 3D-OBJEKTS AUF EINEM ZIFFERBLATT
FORMATION OF A THREE-DIMENSIONAL OBJECT ON A DIAL

(30) Priorité: 17.06.2020 EP 20180566
(43) Date de publication de la demande: 26.04.2023
(73) Titulaire: Rubattel et Weyermann S.A., 2300 La Chaux-de-Fonds (CH)
(72) Inventeur: JEANRENAUD, Frédéric, 2300 La Chaux-de-Fonds (CH); FRITZ, Pierre, 1585 Bellerive (CH)
(74) Mandataire: ICB SA
(86) Numéro de dépôt international: PCT/EP2021/066146
(87) Numéro de publication internationale: WO 2021/255043

(56) Documents cités:
- EP-A1- 3 202 708
- EP-A1- 3 536 826
- US-A1- 2017 299 973

## Description

### Domaine technique

La présente invention concerne un procédé de formation d'un objet. Plus particulièrement, la présente invention concerne un procédé de dépôt de couches pour la formation d'un objet tridimensionnel pour un cadran de montre.

### Arrière-plan technologique

Dans l'état de la technique, il existe plusieurs techniques permettant de réaliser des motifs sur un substrat. Toutefois, ces techniques ne permettent pas de réaliser un objet comprenant une contre-dépouille.

En effet, les procédés actuels utilisent un faisceau de lumière directionnel pour créer des motifs dont la section, c'est-à-dire la coupe transversale est rectangulaire ou de type polygonal tel un trapèze ou un losange.

Des formes plus complexes ne sont actuelles pas possibles avec ces procédés actuels, par exemple, il n'est pas possible de créer des contours arrondis voire des surfaces courbes.

Le document EP3536826A1 décrit un procédé de dépôt pour la formation d'un objet pour une montre selon le préambule de la revendication 1.

### Résumé de l'invention

La présente invention se propose de résoudre totalement ou partiellement ces inconvénients par d'un procédé selon la revendication 1 annexée.

Grâce à cette disposition, il est possible de créer des objets avec des formes complexes tel des contours arrondis ou des surfaces courbes.

Selon un mode de réalisation, ledit objet comprend au moins une deuxième surface plus courbée que ladite au moins une première surface.

Grâce à cette disposition, il est possible de créer des objets avec des formes complexes tel des surfaces courbes.

Selon un mode de réalisation, ladite cavité est formée selon une médiane dudit objet et/ou ledit contour est formée selon une médiane dudit objet.

Selon un mode de réalisation, ladite médiane forme un angle avec ladite au moins une surface de réception.

Selon un mode de réalisation, ledit objet forme une contre-dépouille dans ladite pluralité de couches polymères ou ledit objet comprend une contre-dépouille (224).

Grâce à l'une ou l'autre de ces dispositions précédentes, il est possible de créer des objets avec des formes complexes ayant une contre-dépouille.

Selon l'invention, ladite formation de ladite cavité est réalisée par impression additive.

Grâce à l'une ou l'autre de ces dispositions précédentes, il est possible de créer des objets avec des formes complexes ayant une contre-dépouille.

Selon l'invention, ladite d'une couche d'accroche comprend au moins un matériau parmi Au, Cu, Ag, In, Pt Pd Ni, Ti, Ta, Cr, Th ou un alliage de ces matériaux.

Selon l'invention, ladite au moins une couche de finition comprend au moins un matériau parmi ou un alliage de ces matériaux.

Grâce à ces matériaux, il est possible de réaliser des formes complexes par impression additive.

Selon un mode de réalisation, ledit traitement de surface est réalisé par décapage et/ou stripage.

Grâce à cette disposition, ladite au moins une surface de réception dudit support a un meilleur rendu visuel.

Selon un mode de réalisation, ledit support est en céramique.

Selon un mode de réalisation, ledit dépôt de ladite couche d'accroche est réalisé au contact de ladite au moins une surface de réception.

Grâce à cette disposition, ladite au moins une surface de réception est rendue électriquement conductrice.

### Brève description des figures

L'invention sera décrite ci-après de manière plus détaillée à l'aide des dessins annexés, donnés à titre d'exemples nullement limitatifs, dans lesquels :
- La figure 1 présente un procédé de dépôt **500** selon l'invention ;
- Les figures 2 et 3 illustrent des exemples d'objets ayant une contre-dépouille **224** et/ou une surface courbe, et,
- La figure 4 expose un exemple de cadran de montre réalisé selon ledit procédé de dépôt **500.**

### Description détaillée de l'invention

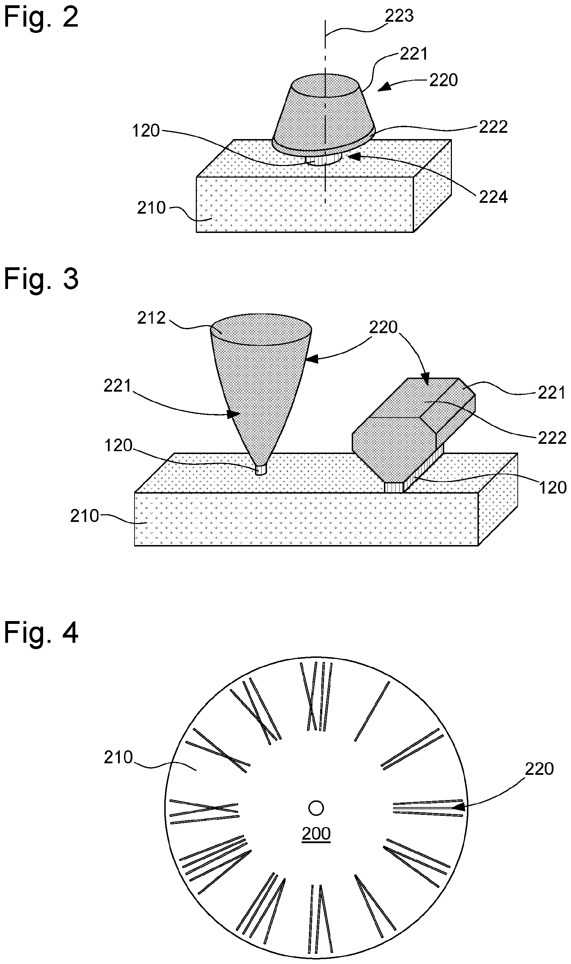

Les figures 2 et 3 présentent différents objets dits complexes de par leurs géométries. En effet, ces objets arborent au moins une surface courbe et ont une contre-dépouille **224** ce qui complexifient la réplication de ces formes à une échelle industrielle.

En effet, la plupart des procédés actuels utilisent un faisceau de lumière directionnel pour créer des motifs avec une section rectangulaire.

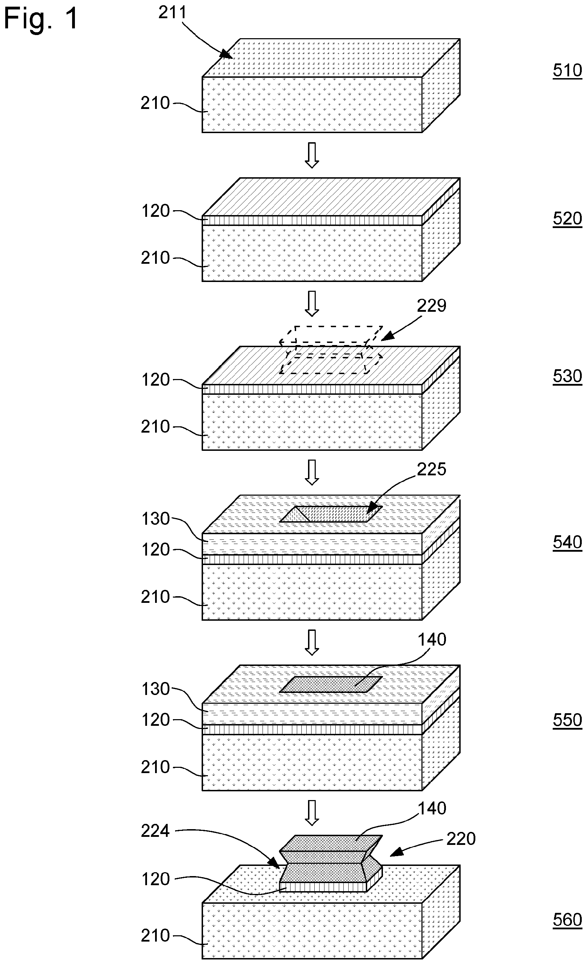

Or, des surfaces courbées ont rendu visuel très appréciées des utilisateurs. À cet effet, la demanderesse propose un procédé de dépôt **500,** visible sur la figure 1, pour la formation d'un objet **220** sur au moins un support **210,** de préférence en céramique, qui peut prendre la forme d'un cadran **210** de montre ou d'une lunette **210** de montre.

Ledit objet **220** peut comporter un périmètre, au moins une première surface **221,** au moins une deuxième surface **222** plus courbée que ladite au moins une première surface **221** comme cela est visible sur la figure 2 et 3, et/ou un volume.

Dans un premier temps, il convient de fournir **510** ledit au moins un support **210** comprenant au moins une surface de réception **211.** S'ensuit le dépôt **520** d'une couche d'accroche **120,** pouvant être composée d'une ou plusieurs couches par voie sèche comme le PVD, CVD ou PE CVD ou ALD, d'au moins un matériau parmi Au, Cu, Ag, In, Pt Pd Ni, Ti, Ta, Cr, Th ou un alliage de ces matériaux, sur ladite au moins une surface de réception **211,** de préférence au contact de ladite au moins une surface de réception **211** de sorte à rendre ladite au moins une surface de réception **211** électriquement conductrice.

Une délimitation **530** est effectuée pour déterminer un contour **229** dudit objet **220** sur ladite couche d'accroche **120** déposée. Ledit contour **229** correspond audit périmètre, à ladite au moins une première surface **221,** à ladite au moins une deuxième surface **222** et/ou audit volume dudit objet **220.** Comme cela est observable sur l'ensemble des objets **220** montrés sur les figures 1 à 4, une contre-dépouille **224** est présente. Ladite contre-dépouille **224,** pouvant être positive ou négative, n'est pas réalisable avec les procédés actuels puisque la source de lumière est directive est ne permet pas de réaliser des objets avec contre-dépouille et plus particulièrement sur des cadrans de montre par exemple.

Ladite délimitation **530** dudit contour **229** est essentielle pour la formation **540** d'une cavité **225** selon ledit contour **229** et, de préférence, selon une médiane **223** dudit objet **220.** Bien que les objets **220** présentent une médiane perpendiculaire à ladite au moins une surface de réception **211,** il se peut que dans des modes de réalisations, ladite médiane **223** forme un angle avec ladite au moins une surface de réception **211.**

Ladite cavité **225** est formée **540** par dépôt d'une pluralité de couches polymères **130** par impression additive sur ladite couche d'accroche **120** de sorte qu'une portion de ladite couche d'accroche **120** équivalant audit périmètre, à ladite au moins une première surface **221** et/ou audit volume dudit objet **220** soit en regard, de préférence libre. Autrement dit, ladite portion de ladite couche d'accroche **120** n'est pas recouverte de couches polymères **130.**

Ladite cavité **225,** sur ladite portion de ladite couche d'accroche **120** en regard, de préférence libre, est remplie par dépôt **520** d'au moins une couche de finition **140** comprenant au moins un matériau parmi ou un alliage de ces matériaux. Ces matériaux sont sélectionnés car ils permettent de réaliser des formes complexes par impression additive.

Afin de rendre un rendu optimal, un traitement de surface **560,** pouvant être réalisé, par décapage et/ou stripage par exemple, sur ladite pluralité de couches polymères **130** et sur ladite couche d'accroche **120** déposée de sorte à découvrir ladite au moins une surface de réception **211** dudit support **210** et à donner un meilleur rendu visuel à ladite au moins une surface de réception **211** dudit support **210.** Dans les cas où la surface supérieure est ladite au moins une deuxième surface **222,** cette dernière, c'est-à-dire ladite au moins une deuxième surface **222** sera recouverte de couches polymères **130,** et ledit traitement de surface **560** retira ladite pluralité de couches polymères **130** présente sur ladite surface supérieure sans endommager le rendu visuel de ladite au moins une deuxième surface **222.**

Dès lors, grâce à cette invention, il est possible de créer des objets avec des formes complexes tel des contours arrondis ou des surfaces courbes et donc des cadrans **210** de montre et/ou des lunettes **210** de montres ayant un rendu visuel inédit et très appréciable.

## Revendications

1. Procédé de dépôt (500) pour la formation d'un objet (220) pour une montre ; l'objet (220) comportant un périmètre, au moins une première surface (221) et/ou un volume ; le procédé de dépôt (500) comprenant au moins un ou une :
- Fourniture (510) d'au moins un support (210) comprenant au moins une surface de réception (211) ;
- Dépôt (520) d'une couche d'accroche (120) sur la au moins une surface de réception (211), cette couche d'accroche (120) étant composée d'une ou plusieurs couches d'au moins un matériau parmi Au, Cu, Ag, In, Pt, Pd, Ni, Ti, Ta, Cr, Th ou un alliage de ces matériaux, de sorte à rendre la au moins une surface de réception (211) électriquement conductrice ;
- Délimitation (530) d'un contour (229) sur la couche d'accroche (120) déposée ; le contour (229) correspondant au périmètre, à la au moins une première surface (221) et/ou au volume de l'objet (220) ;
- Formation (540) d'une cavité (225) selon le contour (229) par dépôt, sur la couche d'accroche (120), d'une pluralité de couches polymères (130), de sorte qu'une portion de la couche d'accroche (120) équivalant au périmètre, à la au moins une première surface (221) et/ou au volume de l'objet (220) soit en regard, de préférence libre, et n'est pas recouverte de couches polymères (130) ;
- Remplissage (550) de la cavité (225) par dépôt (520), sur la portion de la couche d'accroche (120) en regard, de préférence libre, d'au moins une couche de finition (140) comprenant au moins un matériau parmi Au, Cu, Ag, In, Pt, Pd, Ni, Ti, Ta, Cr, Th ou un alliage de ces matériaux et,
- Traitement de surface (560) de la pluralité de couches polymères (130) et de la couche d'accroche (120) déposée de sorte à découvrir la au moins une surface de réception (211) du support (210)
**caractérisé en ce que** le dépôt de la pluralité de couches polymères (130) se fait par impression additive.

2. Procédé de dépôt (500) selon la revendication 1, dans lequel ledit objet (220) comprend au moins une deuxième surface (222) plus courbée que ladite au moins une première surface (221).

3. Procédé de dépôt (500) selon la revendication 1 ou 2, dans lequel ladite cavité (225) est formée selon une médiane (223) dudit objet (220) et/ou ledit contour (229) est formée selon une médiane (223) dudit objet (220).

4. Procédé de dépôt (500) selon la revendication 3, dans lequel ladite médiane (223) forme un angle avec ladite au moins une surface de réception (211).

5. Procédé de dépôt (500) selon l'une quelconque des revendications précédentes, dans lequel ledit objet (220) forme une contre-dépouille (224) dans ladite pluralité de couches polymères (130) ou ledit objet (220) comprend une contre-dépouille (224).

6. Procédé de dépôt (500) selon l'une quelconque des revendications précédentes, dans lequel ladite au moins une couche de finition (140) comprend au moins un matériau parmi Au, Pt, Ag, Cr, Pd ou un alliage de ces matériaux.

7. Procédé de dépôt (500) selon l'une quelconque des revendications précédentes, dans lequel ledit traitement de surface (560) est réalisé par décapage et/ou stripage.

8. Procédé de dépôt (500) selon l'une quelconque des revendications précédentes, dans lequel ledit support (210) est en céramique.

9. Procédé de dépôt (500) selon l'une quelconque des revendications précédentes, dans lequel ledit dépôt (520) de ladite couche d'accroche (120) est réalisé au contact de ladite au moins une surface de réception (211).

## Patentansprüche

1. Abscheidungsverfahren (500) zum Bilden eines Objekts (220) für eine Uhr; wobei das Objekt (220) einen Umfang, mindestens eine erste Oberfläche (221) und/oder ein Volumen aufweist; wobei das Abscheidungsverfahren (500) mindestens Folgendes umfasst:
- Bereitstellen (510) mindestens eines Trägers (210), der mindestens eine Aufnahmefläche (211) umfasst;
- Abscheiden (520) einer Haftschicht (120) auf der mindestens einen Aufnahmefläche (211), wobei die Haftschicht (120) aus einer oder mehreren Schichten aus mindestens einem Material gebildet ist, das aus Au, Cu, Ag, In, Pt, Pd, Ni, Ti, Ta, Cr, Th oder einer Legierung dieser Materialien ausgewählt ist, um die mindestens eine Aufnahmefläche (211) elektrisch leitend zu machen;
- Abgrenzen (530) eines Umrisses (229) auf der abgeschiedenen Haftschicht (120); wobei der Umriss (229) dem Umfang, der mindestens einen ersten Oberfläche (221) und/oder dem Volumen des Objekts (220) entspricht;
- Bilden (540) eines Hohlraums (225) entlang des Umrisses (229) durch Abscheiden einer Vielzahl von Polymerschichten (130) auf der Haftschicht (120), so dass ein Teil der Haftschicht (120), der dem Umfang, der mindestens einen ersten Oberfläche (221) und/oder dem Volumen des Objekts (220) entspricht, gegenüberliegt, vorzugsweise frei ist und nicht von Polymerschichten (130) bedeckt wird;
- Füllen (550) des Hohlraums (225) durch Abscheiden (520) auf dem gegenüberliegenden, vorzugsweise freien Teil der Haftschicht (120) mindestens einer Deckschicht (140), die mindestens ein Material umfasst, das aus Au, Cu, Ag, In, Pt, Pd, Ni, Ti, Ta, Cr, Th oder einer Legierung dieser Materialien ausgewählt ist, und
- Durchführen einer Oberflächenbehandlung (560) an der Vielzahl von Polymerschichten (130) und der abgeschiedenen Haftschicht (120), um die mindestens eine Aufnahmefläche (211) des Trägers (210) freizulegen
**dadurch gekennzeichnet, dass** das Abscheiden der Vielzahl von Polymerschichten (130) durch additive Fertigung erfolgt.

2. Abscheidungsverfahren (500) nach Anspruch 1, wobei das Objekt (220) mindestens eine zweite Oberfläche (222) umfasst, die stärker gekrümmt ist als die mindestens eine erste Oberfläche (221).

3. Abscheidungsverfahren (500) nach Anspruch 1 oder 2, wobei der Hohlraum (225) entlang einer Mitte (223) des Objekts (220) gebildet wird und/oder der Umriss (229) entlang einer Mitte (223) des Objekts (220) gebildet wird.

4. Abscheidungsverfahren (500) nach Anspruch 3, wobei die Mitte (223) einen Winkel mit der mindestens einen Aufnahmefläche (211) bildet.

5. Abscheidungsverfahren (500) nach einem der vorhergehenden Ansprüche, wobei das Objekt (220) eine Hinterschneidung (224) in der Vielzahl von Polymerschichten (130) bildet oder das Objekt (220) eine Hinterschneidung (224) umfasst.

6. Abscheidungsverfahren (500) nach einem der vorhergehenden Ansprüche, wobei die mindestens eine Deckschicht (140) mindestens ein Material umfasst, das aus Au, Pt, Ag, Cr, Pd oder einer Legierung dieser Materialien ausgewählt ist.

7. Abscheidungsverfahren (500) nach einem der vorhergehenden Ansprüche, wobei die Oberflächenbehandlung (560) durch Beizen und/oder Strippung durchgeführt wird.

8. Abscheidungsverfahren (500) nach einem der vorangehenden Ansprüche, wobei der Träger (210) aus Keramik hergestellt ist.

9. Abscheidungsverfahren (500) nach einem der vorhergehenden Ansprüche, wobei das Abscheiden (520) der Haftschicht (120) in Kontakt mit der mindestens einen Aufnahmefläche (211) durchgeführt wird.

## Claims

1. Deposition method (500) for the formation of an object (220) for a watch; the object (220) including a perimeter, at least one first surface (221) and/or a volume; the deposition method (500) comprising at least one step of:
- Supplying (510) at least one support (210) comprising at least one receiving surface (211);
- Depositing (520) an adhesion layer (120) on the at least one receiving surface (211), said adhesion layer (120) being formed of one or more layers made of at least one material selected from among Au, Cu, Ag, In, Pt, Pd, Ni, Ti, Ta, Cr, Th or an alloy of these materials, so as to render said at least one receiving surface (211) electrically conducting;
- Delimiting (530) an outline (229) on the deposited adhesion layer (120); the outline (229) corresponding to the perimeter, to the at least one first surface (221) and/or to the volume of the object (220);
- Forming (540) a cavity (225) along the outline (229) by depositing, on the adhesion layer (120), a plurality of polymer layers (130), such that a portion of the adhesion layer (120) equivalent to the perimeter, to the at least one first surface (221) and/or to the volume of the object (220) is opposite, preferably free, and is not covered by polymer layers (130);
- Filling (550) the cavity (225) by depositing (520) on the opposite, preferably free, portion of the adhesion layer (120) at least one finishing layer (140) comprising at least one material selected from Au, Cu, Ag, In, Pt, Pd, Ni, Ti, Ta, Cr, Th or an alloy of these materials; and,
- Carrying out a surface treatment (560) on the plurality of polymer layers (130) and the deposited adhesion layer (120) so as to expose the at least one receiving surface (211) of the support (210)
**characterized in that** the deposition of the plurality of polymer layers (130) is made by additive manufacturing.

2. Deposition method (500) according to claim 1, wherein said object (220) comprises at least one second surface (222) that is more curved than said at least one first surface (221).

3. Deposition method (500) according to claim 1 or 2, wherein said cavity (225) is formed along a median (223) of said object (220) and/or said outline (229) is formed along a median (223) of said object (220).

4. Deposition method (500) according to claim 3, wherein said median (223) forms an angle with said at least one receiving surface (211).

5. Deposition method (500) according to any one of the preceding claims, wherein said object (220) forms an undercut (224) in said plurality of polymer layers (130) or said object (220) comprises an undercut (224).

6. Deposition method (500) according to any one of the preceding claims, wherein said at least one finish layer (140) comprises at least one material selected from among Au, Pt, Ag, Cr, Pd or an alloy of these materials.

7. Deposition method (500) according to any one of the preceding claims, wherein said surface treatment (560) is carried out by pickling and/or stripping.

8. Deposition method (500) according to any one of the preceding claims, wherein said support (210) is made of ceramic.

9. Deposition method (500) according to any one of the preceding claims, wherein said deposition (520) of said adhesion layer (120) is carried out in contact with said at least one receiving surface (211).
